# EUROPEAN PATENT SPECIFICATION

(11) **EP 4 082 975 B1**
(45) Date of publication and mention of the grant of the patent: **08.04.2026**
(21) Application number: 21170392.1
(22) Date of filing: 26.04.2021
(51) Int. Cl.: C02F 1/72, C02F 1/76, C02F 1/78, C02F 101/10, C02F 103/10

(54) **OXIDATION OF SULPHUR SPECIES**
OXIDATION VON SCHWEFELSPEZIES
OXYDATION D'ESPÈCES SOUFRÉES

(43) Date of publication of application: 02.11.2022
(73) Proprietor: Metso Finland Oy, 02230 Espoo (FI)
(72) Inventor: Kauppi, Janne, 54920 Taipalsaari (FI); Saari, Eija, 02230 Espoo (FI)
(74) Representative: Papula Oy

(56) References cited:
- WO-A1-2015/035681
- CA-A1- 2 921 749
- CN-A- 108 840 483
- US-A1- 2019 241 452
- US-B2- 8 678 354
- GERVAIS M�LINDA ET AL: "Comparative efficiency of three advanced oxidation processes for thiosalts oxidation in mine-impacted water", MINERALS ENGINEERING, ELSEVIER, AMSTERDAM, NL, vol. 152, 30 March 2020 (2020-03-30), XP086137206, ISSN: 0892-6875, [retrieved on 20200330], DOI: 10.1016/J.MINENG.2020.106349

## Description

### FIELD OF THE INVENTION

The invention relates to processing aqueous streams containing hazardous sulphur species, and particularly to modification of sulphur species by an oxidation treatment.

### BACKGROUND ART

Gas-liquid interactions are slow in kinetics due to mixing energy requirements and surface area related to gas-liquid contact area. This causes that the reactors applied need to be heavily agitated to keep the liquid in movement to change the active surface area. A carbonation tank may be used to precipitate calcium carbonate and to reduce **pH** with carbon dioxide gas interaction. Dissolved air flotation may be applied to remove COD (chemical oxygen demand) and BOD (biological oxygen demand) from process water. Gas-liquid interaction may also be utilized to destroy residual viruses from treated municipal wastewater or to oxidize sulphur species to sulphate.

A Fenton oxidation process utilizes reactions of peroxides (e.g. hydrogen peroxide, H₂O₂) with iron ions to form reactive oxygen species that readily oxidize organic or inorganic compounds (see Equations (1)-(9) below). The Fenton oxidation process follows a complex mechanism where the production of hydroxyl radicals occurs through a chain initiation reaction (Eq. (1)). However, the hydroxyl radicals may be scavenged by ferrous ions (Eq. (3)), hydrogen peroxide (Eq. (7)) and/or hydroperoxyl radicals (Eq. (9)), and/or the hydroxyl radicals may even be auto scavenged (Eq. (6)). Thus, the hydrogen peroxide in the Fenton oxidation process may act both as a hydroxyl radical generator (Eq. (1)) and as a scavenger (Eq. (7)).

Fe²⁺ + H₂O₂ → Fe³⁺ + OH⁻ + ^{•}OH. *k*_{2*.*1} = 40-80 L mol⁻¹ s⁻¹ (1)

Fe³⁺ + H₂O₂ → Fe²⁺ + ^{•}O₂H + H⁺, *k*_{2.2} = 9.1 × 10⁻⁷ (L mol⁻¹ s⁻¹) (2)

Fe²⁺ + ^{•}OH→ Fe³⁺ + OH⁻, *k*_{2.3} = 2.5-5 × 10⁸ (L mol⁻¹ s⁻¹) (3)

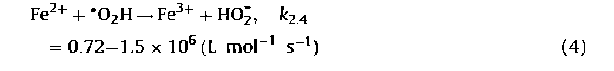

Fe³⁺ + ^{•}O₂H - Fe²⁺ + O₂ + H⁺, *k*_{2.5} = 0.33-2.1 × 10⁶ (L mol⁻¹ s⁻¹) (5)

^{•}OH + ^{•}OH → H₂O₂, *k*_{2.6} = 5-8 × 10⁹ (L mol⁻¹ s⁻¹) (6)

^{•}OH + H₂O₂ → ^{•}O₂H + H₂O, *k*_{2.7} = 1.7-4.5 × 10⁷ (L mol⁻¹ s⁻¹) (7)

^{•}O₂H + ^{•}O₂H → H₂O₂ + O₂, *k*_{2.8} = 0.8-2.2 × 10⁶ (L mol⁻³ s⁻¹) (8)

^{•}OH + ^{•}O₂H → H₂O + O₂, *k*_{2.9} = 1.4 × 10¹⁰ (L mol⁻¹ s⁻¹) (9)

2H₂O₂ → O₂ + 2H₂O | (10)

One drawback of the Fenton oxidation process is the wastage of oxidants due to the radical scavenging effect of hydrogen peroxide (Eq. (7)) and its self-decomposition (Eq. (10)). This leads to an excessive oxidant consumption and to unnecessary increase of treatment cost. Another drawback related to the Fenton oxidation process is the continuous loss of the iron ion catalyst due to the formation of solid iron containing sludge. This sludge generation causes severe economic and environmental challenges. If the Fenton process is applied to wastewater treatment, pH needs to be controlled close to 3. If pH is higher than 3, the activity of the Fenton reagent is reduced due to the presence of relatively inactive iron oxohy-droxides and due to the formation of ferric hydroxide precipitate. Also, the oxidation potential of hydroxyl radicals decreases with increasing pH and even the auto-decomposition of hydrogen peroxide is accelerated. On the other hand, if pH is too low, the oxidation efficiency decreases, as the iron catalyst forms complex species [Fe(H₂O)₆]²⁺ which react more slowly with hydrogen peroxide. In addition, the peroxide gets solvated in a low pH to form stable oxonium ions [H₃O₂]⁺ that stabilize the hydrogen peroxide and reduce its reactivity with ferrous ions. The oxidation efficiency is even further decreased in the presence of sulphate anions and phosphate anions due to complex formation between the Fe ion and the anions. Also, the Fe concentration needs to be controlled exactly, as overuse of ferrous ions leads to an increase in the unutilized quantity of iron salts, which contributes to an increase in the total dissolved solids content of the wastewater effluent stream. Similarly, accurate control of the H₂O₂ dosage is needed, as an excess of H₂O₂ contributes to COD and causes scavenging of generated hydroxyl radicals, decreasing the wastewater treatment efficiency. Relevant prior art documents are GERVAIS MÉLINDA ET AL: "Comparative efficiency of three advanced oxidation processes for thiosalts oxidation in mine-impacted water",MINERALS ENGINEERING, ELSEVIER, AMSTERDAM, NL, vol. 152, 30 March 2020 (2020-03-30); WO 2015/035681 A1, CN 108 840 483 A, CA 2 921 749 A1, US 8 678 354 B2, US 2019/241452 A1.

### SUMMARY

The following presents a simplified summary of features disclosed herein to provide a basic understanding of some exemplary aspects of the invention. This summary is not an extensive overview of the invention. It is not intended to identify key/critical elements of the invention or to delineate the scope of the invention. Its sole purpose is to present some concepts disclosed herein in a simplified form as a prelude to a more detailed description.

The essential features of the invention are set out in independent method claim 1. Preferred embodiments are defined in the dependent claims.

One or more examples of implementations are set forth in more detail in the description below. Other features will be apparent from the description, and from the claims.

### BRIEF DESCRIPTION OF THE DRAWINGS

In the following the invention will be described in greater detail by means of embodiments, with reference to the attached drawings, in which
Figure 1 is a block diagram illustrating the method according an exemplary embodiment;
Figure 2 illustrates even distribution of small oxidant gas bubbles in an aqueous liquid according to an exemplary embodiment;
Figures 3 and 4 show test results for the measurement of sulphur species concentrations in an aqueous liquid.

### DETAILED DESCRIPTION OF EMBODIMENTS

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising", "containing" and "including" should be understood as not limiting the described embodiments to consist of only those features that have been mentioned and such embodiments may contain also features/structures that have not been specifically mentioned.

Various sulphur species, such as SO₃²⁻, S₂O₃²⁻, S₃O₆²⁻, S₄O₆²⁻ and SO₄²⁻, deteriorate the surface chemistry and floatability of minerals in process waters. These sulphur species are present e.g. when processing sulphide ores. Sulphur oxidation begins and continues throughout various processing steps. The oxidation initiates during grinding and flotation stages, and continues in the tailings and waste rock area, resulting in acid drainage type of waters. Depending on the process conditions, oxidation may generate various sulphur species such as sulphites, bisulphites, polysulfides and sulphate. Polysulfides, also referred to as thiosalts, are sulphur oxyanions compounds. Sulphur oxyanions have a general formula of SₓO_{y}²⁻. Examples of sulphur oxyanions are thiosulfate (S₂O₃²⁻), trithionate (S₃O₆²⁻) and tetrathionate (S₄O₆²⁻).

There is a need to level-off the harmful impacts of sulphur species on flotation performance. The tightening environmental permit limits for COD require the removal of harmful contaminants from the effluents before discharging the effluents to the environment. An industrial method and apparatus for treating these type of process waters with a much higher pH, are thus desirable.

An embodiment provides a method that improves flotation performance by reducing the concentrations of harmful sulphur species (thiosalts) in process water by advanced oxidation. Contrary to the Fenton process which uses acidic conditions, an embodiment enables a kinetically feasible route for oxidation of sulphur species also in alkaline or neutral conditions.

The method uses gas-liquid sparger technology (e.g. Cleamix-CLR-Sparger system) where oxidizing gas is used. Sparger devices that may be utilized are discussed e.g. in a publication WO 2019 012 179 A1.

In the present invention, an aqueous liquid stream containing sulphur oxyanions is mixed, in at least one sparger device, with at least one oxidant in gaseous form, thereby obtaining, mixed within the aqueous liquid stream, oxidant microbubbles containing reactive radicals species in contact with dissolved or condensed oxidant and the aqueous liquid stream, and/or reactive radicals species in contact with the at least one oxidant in gaseous form and the aqueous liquid stream. The dissolved or condensed oxidant and the reactive radicals species, and/or the at least one oxidant in gaseous form and the reactive radicals species, are allowed to contact sulphur oxyanions contained in the aqueous liquid stream and to oxidize sulphur oxyanions contained in the aqueous liquid stream to sulphate and/or to other sulphur oxidation states, by an oxidative reaction of the sulphur oxyanions with the reactive radicals species, thereby forming sulphate and/or other sulphur oxidation states containing aqueous liquid stream. E.g. a thin film of condensed/dissolved oxidant may form onto the surface of the microbubble and/or the gas may dissolve directly to the aqueous phase. Condensed oxidant nanodroplets may form onto the surface of the oxidant microbubble.

The present invention uses an oxidising gas, for example, vaporized hydrogen peroxide air mixture, fed to a sparger device. In addition other oxidizing or active gases such as hydrazine, hydrogen sulphide, sodium hypochlorite, carbon monoxide, hydrogen, oxygen, peracid, ozone, chlorine may be used in connection with the sparger device. This enables faster reaction kinetics and heavily reduced mixing energy in the sparger device. The present invention may involve multiple spargers and storage vessels in series and/or in parallel, and unused oxidation gas mixture may be recycled within the apparatus.

The present invention is based on the use of vaporized oxidant, such as H₂O₂ vapour. To enable the oxidation treatment, H₂O₂ is vaporized, by using suitable vaporization technology. H₂O₂ concentration in the formed vapour may be measured, e.g. by using Vaisala Peroxocap sensor technology. H₂O₂ vapor with known concentration is fed to a sparger device (e.g. Outotec sparger technology). Small H₂O₂ bubbles (microbubbles) with uniformity in size and distribution are formed in the sparger device. The oxidation of sulphur oxyanions then happens in the sparger device. The effect of higher temperature oxidant gas cooling rapidly down makes the bubble size smaller and due to the bubble volume reduction, vaporized H₂O₂ condensates e.g. as an oxidant nano droplet onto the microbubble wall. At the same time, reactive radicals species, e.g. reactive ion radicals, are formed in contact with the oxidant nano droplets. In the method, an aqueous liquid stream containing sulphur oxyanions is mixed, in the sparger device, with a gaseous mixture of one or more oxidants. This results in obtaining, mixed within the aqueous liquid stream, oxidant nano droplets in microbubbles with dissolving active gas (vapourized H₂O₂) and the formation of reactive radicals species in contact with the oxidant nano droplets and/or vapourized oxidant (vapourized H₂O₂). The reactive radicals species are allowed to oxidize sulphur oxyanions contained in the aqueous liquid stream, by an oxidative reaction of the sulphur oxyanions with the reactive radicals species, thereby forming sulphate and/or other sulphur oxidation states containing aqueous liquid stream. An example of formed other sulphur oxidation state is S₂O₃²⁻. The chemical reaction happens in the sparger on the liquid-liquid interface between the oxidant nano droplet and/or dissolved active gas compound (oxidant), and the aqueous liquid. The oxidant nano droplets get mixed within the aqueous liquid, dissolving active gas compound oxidant, and remaining microbubbles only contain humidity and air.

To enable the oxidation reaction, pH may be in alkaline, neutral or acidic pH region. During the oxidation reaction, sulphur oxyanions such as thiosulphates and polythionates are oxidized almost quantitatively to sulphate (SO₄²⁻). If the sulphate (SO₄²⁻) concentration in the effluent becomes too high, the sulphate (SO₄²⁻) concentration may be lowered to a target level e.g. by using Outotec ettringite process.

In the present invention, alkaline or neutral process waters may be treated as such without pH adjustment, or with minimal pH adjustment prior to or during the treatment. The present invention also enables oxidation of sulphur oxyanions in acidic conditions. If desired, pH may be adjusted to be in acidic, alkaline or neutral pH region prior to the treatment and/or during the treatment.

In the present invention, no additional catalyst reagents need to be added to enable the oxidation of sulphur oxyanions. However, if desired, it is also possible to use various catalysts in the present invention, to further enhance the oxidation of sulphur oxyanions.

In the present invention, strict pH and reagent dosing control are avoided.

In the present invention, the vaporized H₂O₂ may be fed to the sparger device, initiating a radical generation in the sparger device, which results in the formation of selective radicals with a long lifetime and a large range of action. An example of the formed radicals is a carbonate radical which is a symmetric radical, by virtue of resonance stabilization, which has a long lifetime, and thus a far-reaching action in oxidation. Other long lifetime radicals may also be utilized. Although these radicals formed are less reactive than oxygen radicals, they still possess sufficient reactivity for abstracting electrons or hydrogen atoms from many contaminants. The use of longer lifetime radicals increases the collision probability between the radicals and the sulphur oxyanions, thus enhancing the oxidation of the sulphur oxyanions.

In the present invention, vaporized H₂O₂ is fed to the sparger. Reactive radicals species and microbubbles containing H₂O₂ nanodroplets in contact with the reactive radicals species are generated in the sparger. Dissolved active gas compound(s) may also interact in the radical formation. The microbubbles are of uniform size and have a uniform distribution within the aqueous liquid stream to be treated. As the time before bubble coalescence occurs is quite long, the oxidant distributes efficiently to the entire reaction volume in the sparger. This efficient and uniform distribution enhances the collision probability of the reactive radicals species and sulphur contaminants, and maximizes the oxidation efficiency. Thus enhanced oxidation of sulphur oxyanions is obtained.

Additionally or alternatively an aqueous liquid stream containing sulphur oxyanions is mixed, in at least one sparger device, with at least one oxidant in gaseous form, thereby obtaining, mixed within the aqueous liquid stream, reactive radicals species in contact with the at least one oxidant in gaseous form and the aqueous liquid stream. The at least one oxidant in gaseous form and the reactive radicals species, are allowed to contact sulphur oxyanions contained in the aqueous liquid stream and to oxidize sulphur oxyanions contained in the aqueous liquid stream to sulphate and/or to other sulphur oxidation states, by an oxidative reaction of the sulphur oxyanions with the reactive radicals species, thereby forming sulphate and/or other sulphur oxidation states containing aqueous liquid stream.

The present invention enables decreasing the amount of sulphur species in the aqueous stream. The cost for sulphur oxyanion treatment is compensated by the increased recovery and return of the sellable concentrate.

Multiple spargers may be arranged in segment compartments so that multiple oxidation reaction segments may be used in parallel or in series. Each segment has a sparger and a storage vessel in flow connection with the sparger. An optional pump may feed liquid-gas mixture to a common channel or to the oxidation segment (to the sparger). The common channel is located in the center of the reactor cascade (fully through design). The feeding and distribution system may be located at the top of the oxidation segment for multi-segment parallel and/or serial arrangement.

One or more chemical gasification/vaporization units are located separately, which may be single chemical or multi chemical unit(s). An optional gas storage for the oxidant gas may be located between the gasification/vaporization unit(s) and the sparger(s), and an optional gas compressing fan or gas compressor feeds vaporized hydrogen peroxide to the sparger(s).

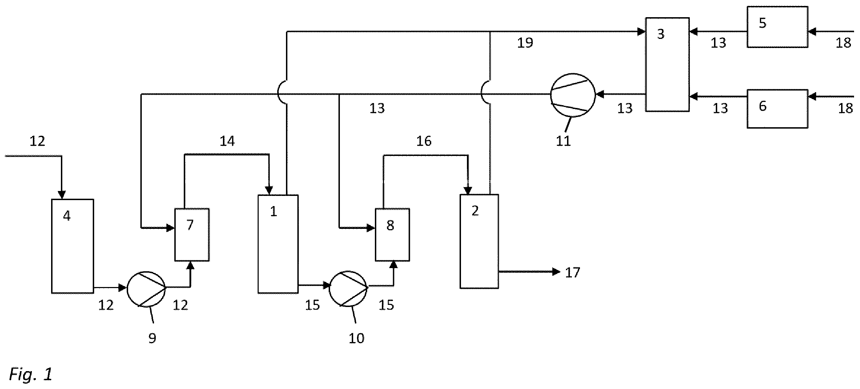

Figure 1 is a block diagram that illustrates an exemplary method and apparatus. Referring to Figure 1, water to be treated, i.e. aqueous liquid stream 12 containing sulphur oxyanions, is fed in acidic, neutral or alkaline conditions to a first sparger device 7. The feeding may be performed from a storage tank 4 by means of a pump 9 arranged between the first sparger device 7 and the storage tank 4. If desired, **pH** adjustment may be carried out in the storage tank 4, so that the aqueous liquid stream 12 containing sulphur oxyanions is fed in acidic, neutral or alkaline conditions to the first sparger device 7. The aqueous liquid stream 12 containing sulphur oxyanions is mixed, in the first sparger device 7, with at least one oxidant 13 (e.g. hydrogen peroxide) in gaseous form, such that reactive radicals species and microbubbles mixed within the aqueous liquid stream are produced. Oxidant nano droplets in contact with the reactive radicals species may be formed in the microbubble on the wall of the microbubble, and remaining active gas compound(s) dissolves into the aqueous stream 12. The oxidant nano droplets and the reactive radicals species are allowed to contact and oxidize sulphur oxyanions contained in the aqueous liquid stream to sulphate and/or other sulphur oxidation states, by an oxidative reaction of the sulphur oxyanions with the reactive radicals species. This reacting of the sulphur oxyanions with the reactive radicals species takes place in the first sparger device 7. The oxidation reaction occur via the formation of the reactive radicals species and oxidant nano droplets on the surface of the microbubbles and/or with dissolved oxidant, and results in the formation of oxidised sulphur species oxidised to sulphate and/or other sulphur oxidation states. A first storage vessel 1 is located in fluid connection 14 with the first sparger device 7 after the first sparger device 7. An aqueous stream 14 containing the oxidised sulphur species oxidised to sulphate and/or other sulphur oxidation states is fed from the first sparger device 7 to the first storage vessel 1. Unused gaseous phase oxidant 19 may be recycled to a gas storage 3 or to a vaporizer 5, 6. Unused reactive radicals species in the liquid may react to other compounds.

Additionally or alternatively the aqueous liquid stream containing sulphur oxyanions is mixed, in at least one sparger device, with at least one oxidant in gaseous form, thereby obtaining, mixed within the aqueous liquid stream, reactive radicals species in contact with the at least one oxidant in gaseous form and the aqueous liquid stream. The at least one oxidant in gaseous form and the reactive radicals species, are allowed to contact sulphur oxyanions contained in the aqueous liquid stream and to oxidize sulphur oxyanions contained in the aqueous liquid stream to sulphate and/or to other sulphur oxidation states, by an oxidative reaction of the sulphur oxyanions with the reactive radicals species, thereby forming sulphate and/or other sulphur oxidation states containing aqueous liquid stream.

To enhance the oxidation of sulphur oxyanions, the apparatus may comprise multiple oxidation segments in series and/or in parallel, wherein each oxidation segment has a sparger device and a storage vessel, respectively. Figure 1 illustrates a situation where two oxidation segments are arranged in series. In Figure 1, an aqueous liquid flow 15 obtainable from the first storage vessel 1 may still contain sulphur oxyanions that are to be oxidised in the next oxidation segment. The aqueous liquid flow 15 from the first storage vessel 1 is therefore fed from the first storage vessel 1 to a second sparger device 8 by means of an optional pump 10 arranged between the second sparger device 8 and the first storage vessel 1. The aqueous liquid flow 15 containing sulphur oxyanions is fed in acidic, neutral or alkaline conditions to the second sparger device 8. The aqueous liquid flow 15 containing sulphur oxyanions is mixed, in the second sparger device 8, with at least one oxidant 13 in gaseous form, thereby producing reactive radicals species and microbubbles containing oxidant nano droplets in contact with the reactive radicals species, mixed within the aqueous liquid stream. The oxidant nano droplets and the reactive radicals species are allowed to contact and oxidize sulphur oxyanions contained in the aqueous liquid flow to sulphate, by oxidative reaction of the sulphur oxyanions with the reactive radicals species. This reacting of the sulphur oxyanions with the reactive radicals species takes place in the second sparger device 8. The oxidation reaction occur via the formation of the reactive radicals species and oxidant nano droplets on the surface of the microbubbles, and results in the formation of sulphate and/or other sulphur oxidation states. A second storage vessel 2 is located in fluid connection 16 with the second sparger device 8 after the second sparger device 8. An aqueous stream 16 containing the oxidised sulphur species oxidised to sulphate and/or other sulphur oxidation states is fed from the second sparger device 7 to the second storage vessel 2. Unused gaseous phase oxidant 19 may be recycled to a gas storage 3 or to a vaporizor 5, 6. Unused reactive radicals species in the liquid may react to other compounds.

Additionally or alternatively the aqueous liquid stream containing sulphur oxyanions is mixed, in at least one sparger device, with at least one oxidant in gaseous form, thereby obtaining, mixed within the aqueous liquid stream, reactive radicals species in contact with the at least one oxidant in gaseous form and the aqueous liquid stream. The at least one oxidant in gaseous form and the reactive radicals species, are allowed to contact sulphur oxyanions contained in the aqueous liquid stream and to oxidize sulphur oxyanions contained in the aqueous liquid stream to sulphate and/or to other sulphur oxidation states, by an oxidative reaction of the sulphur oxyanions with the reactive radicals species, thereby forming sulphate and/or other sulphur oxidation states containing aqueous liquid stream.

An aqueous liquid flow 17 may be discharged by means of a discharge pipeline 17 from the second storage vessel 2. The discharged aqueous liquid flow 17 from the second storage vessel 2 is a sulphate and/or other sulphur oxidation states containing effluent 17 in liquid form obtained from the second reactor vessel 2.

The at least one oxidant 13 in gaseous form may be obtained by vaporizing, in one or more vaporizers 5, 6, one or more oxidants 18. The formed gaseous oxidant 13 or gaseous oxidant mixture 13 may be fed from the vaporizer(s) 5, 6 to an optional gas storage 3. Unused oxidant 19 may be recycled in gaseous form from the storage vessel(s) 1, 2 to the gas storage 3 containing the at least one oxidant 13 in gaseous form. A fan or compressor 11 may be arranged between the gas storage 3 and the sparger device(s) 7, 8. The fan/compressor 11 may be configured to feed the at least one oxidant 13 in gaseous form from the gas storage 3 to the sparger device(s) 7, 8. The at least one oxidant 13 may be fed to the sparger device(s) 7, 8 at a temperature of, for example, 10 - 100 °C, preferably 10 - 40 °C, 10 - 65 °C, 40 - 65°C, 40 - 100°C, or 65 - 100 °C, more preferably 10 - 65 °C, or 40 - 110 °C. Heating of the gas to a desired temperature may be carried out in the gas storage 3 and/or in the vaporizer(s) 5, 6 or by online heating. A higher temperature of the gaseous mixture 13 enables achieving a higher concentration of oxidant in the gas phase and in the microbubbles in the sparger device(s) 7, 8. The formed sulphate and/or other sulphur oxidation states flow within the aqueous liquid stream from the sparger to the storage vessel from which the aqueous liquid stream containing the sulphate and/or other sulphur oxidation states is removed as an effluent or fed to the next oxidation segment. Unused oxidant gas may flow in the liquid from the sparger to the storage vessel and be recycled to the gas storage from the storage vessel as a gas flow.

Two or more sparger devices and/or storage vessels may be arranged in parallel and/or in series. The sparger device 7, 8 may form an oxidation segment with the respective storage vessel 1, 2, and two or more oxidation segments may be arranged in parallel and/or in series. Figure 1 illustrates a situation where two oxidation segments are arranged in series.

The reactive radicals species formed in sparger device(s) 7, 8 are carbonate radicals, hydroxyl radicals, and/or other reactive radicals species having a reactivity lower than that of the hydroxyl radicals. The reactive radicals species formed may react with the oxidant to form secondary ion radicals, which further enhances the oxidation reaction between the sulphur oxyanions and the reactive radicals species. The reactive radicals species may be formed in the sparger. The oxidant is in the gaseous form, and once it cools down in the sparger it forms nano droplets which eventually contact the aqueous phase. In this contact or during this contact the reactive radicals species are formed. The formed nano droplets and sulphur oxyanions contained in the aqueous liquid stream are allowed to contact in the presence of the reactive radicals, to oxidize sulphur oxyanions contained in the aqueous liquid stream to sulphate and/or to other sulphur oxidation states.

Additionally or alternatively the aqueous liquid stream containing sulphur oxyanions is mixed, in at least one sparger device, with at least one oxidant in gaseous form, thereby obtaining, mixed within the aqueous liquid stream, reactive radicals species in contact with the at least one oxidant in gaseous form and the aqueous liquid stream. The at least one oxidant in gaseous form and the reactive radicals species, are allowed to contact sulphur oxyanions contained in the aqueous liquid stream and to oxidize sulphur oxyanions contained in the aqueous liquid stream to sulphate and/or to other sulphur oxidation states, by an oxidative reaction of the sulphur oxyanions with the reactive radicals species, thereby forming sulphate and/or other sulphur oxidation states containing aqueous liquid stream.

The formation of the reactive radicals species in the sparger may involve the formation of primary radicals which thereafter react to form secondary radicals. Examples of primary radicals include carbonate radical and reactive oxygen species such as hydroxyl radical. An example of a secondary radical is reactive oxygen species, e.g. super-oxide radical.

The type of radicals formed may depend on the oxidant used and on the compounds in the aqueous liquid stream being treated. If the oxidant is e.g. oxygen, ozone, peroxide, the primary radicals formed in contact with water phase are reactive oxygen species. If the water phase has impurities like carbonate, chloride or sulphate, the reactive oxygen species may further react to secondary radicals that might be e.g. carbonate radical, chloride radical, or sulphate radical. If the oxidant is e.g. chlorine, primary radicals formed may be chlorine radicals, chloride radicals, and reactive oxygen species. If these contact e.g. carbonate in water, carbonate radicals may form.

The oxidant is one or more of hydrogen peroxide; a mixture of nitrogen gas and hydrogen peroxide; or a mixture of air and hydrogen peroxide.

According to the invention, the oxidant is hydrogen peroxide, a mixture of hydrogen peroxide and nitrogen gas, or a mixture of hydrogen peroxide and air.

In an embodiment, the oxidant is fed to the apparatus by using a carrying gas such as nitrogen (N₂) or air.

In the method SO₃²⁻, S₂O₃²⁻, S₃O₆²⁻, S₄O₆²⁻ and/or other sulphur oxyanions are oxidized to sulphate and/or to other sulphur oxidation states in the sparger device(s) 7, 8.

An embodiment provides a method that improves flotation performance by reducing the concentrations of harmful sulphur species (thiosalts) in process water by advanced oxidation in a sparger. Contrary to the Fenton process which uses acidic conditions, an embodiment discloses a kinetically feasible route for oxidation of sulphur species in alkaline conditions.

The present method utilizes gas-liquid sparger technology where a gas mixture of oxidizing gas and reactive radicals species is used. The Fenton process uses liquid hydrogen peroxide in acidic conditions with a catalyst (ferrous based chemicals) to oxidize impurities/organic matter (chemicals, mold, bacteria, viruses).

The present invention has lower CAPEX and OPEX over Fenton process, and in the present invention the reaction kinetics can be controlled better, and a better selectivity is achieved.

Compared to liquid-liquid chemistry, following features and advantages are obtainable by the present invention. The present invention enables a very homogenous and even distribution of small gas mixture bubbles in the liquid to be treated. The bubbles are microbubbles having a micrometer scale diameter. Thereby the chemicals are distributed homogenously and evenly into the liquid. The movement and collisions of the small bubbles enable mixing of the liquid with a very small amount of energy in the reactor vessel. The collision probability between the generated radicals and substances to be oxidized is enhanced, enabling the formation of oxidant nano droplets on the surface of the microbubbles, which maximizes contact between the radicals and target sulphur compounds before the decay of the radicals. Therefore, a very fast reaction kinetics and a linear reaction kinetics curve are achieved. Stochiometric chemistry applies in the oxidation reaction, without half time problems.

The Fenton treatment needs to be carried out in highly acidic conditions. Consequently, the Fenton is merely usable for acid drainage waters with pH close to 3-4. Specifically, the Fenton process is not usable for process waters having pH of 6-10. If the concentrator plant waters are treated by using the Fenton process, pH needs to be decreased from pH of 5-9, to pH of 3, with sulphuric acid, and then after the Fenton treatment, pH needs to be increased with lime milk from pH of 3, to the plant water target pH of 7-9. This excessive use of acids and bases is costly, and also results in unwanted increase of counter ion concentrations (typically Ca and SO₄). The present invention solves these problem of the Fenton process, as the present invention enables sulphur species oxidation also in alkaline or neutral conditions, wherein process waters are treated as such, or with a minimal pH adjustment prior to the treatment and/or during the treatment.

The Fenton process also requires an additional catalyst (typically Fe²⁺ and/or other heavy metal ions, or synthetic catalyst materials) to generate required radicals from H₂O₂ to oxidize the sulphur compounds. The operating window of the Fenton process is very narrow. From the process control point of view, the Fenton process requires very precise **pH** control, as well as very precise dosing control for the Fe catalyst and liquid H₂O₂. Outside this narrow operating window, the process efficiency in the Fenton process deteriorates dramatically. In the present invention, such a strict **pH** or dosing control is not required.

The Fenton process suffers from the very short half-life (about nanoseconds) and high reactivity of the oxygen radicals. Because of this, the probability of the oxygen radicals reacting with countless other compounds and materials present in the reaction environment prior to contacting the sulphur species is high. Especially, if the mixing of H₂O₂ to the reaction volume is poor, the probability of the oxygen radicals quickly finding sulphur compounds to react with is low. Therefore, in the Fenton process the oxygen radicals decay rapidly due to various side reactions, and the oxidation of sulphur compounds remains poor.

In the present invention, vaporized oxidant, such as vaporized H₂O₂, and an aqueous liquid stream in alkaline, neutral or acidic conditions, are fed to a sparger device, which initiates a radical generation that results in the formation of more selective radicals with a much longer lifetime and considerably larger range of action. One or more radicals may form, including a carbonate radical which is a symmetric radical, by virtue of resonance stabilization, and which has a much longer lifetime and, thus, a more far-reaching action as an oxidant. Still, the carbonate radical has sufficient reactivity for abstracting electrons or hydrogen atoms from many contaminants. The use of longer lifetime radicals in the present invention increases the collision probability between the radical and sulphur oxyanions in the sparger device, thus enhancing the oxidation of the sulphur oxyanions.

In the Fenton process, liquid peroxide needs to be added to the water to be treated. In typical thiosalt concentration ranges, the required H₂O₂ dosage is very small compared to the overall water volume (around 1% v/v), and as the formed radicals are very short-lived, the efficiency of mixing becomes critical. In the reactors used, the mixing is not complete enough to maximize the collision probability of the short-lived radicals with the sulphur species. Instead, a large proportion of the radicals decay without oxidizing the sulphur species, making the oxidation process inefficient in the Fenton process.

In the present invention, H₂O₂ is mixed as small H₂O₂ vapor bubbles to the water to be treated. The generating of the small H₂O₂ vapor bubbles is done by using a sparger that creates small H₂O₂ bubbles with uniformity in size and distribution. The time before bubble coalescence occurs is quite long, i.e. several seconds, and therefore the oxidant distributes rapidly and efficiently in the water to be treated to the entire reaction volume of the sparger. This efficient and uniform distribution enhances the collision probability of the reactive radicals species (e.g. carbonate radical) with the target contaminants (sulphur oxyanions) and thus maximizes the oxidation efficiency. Due to the condensation effect, part of the H₂O₂ vapour condensates to nano droplets and/or as thin film, and some part remains H₂O₂ vapour.

The aqueous liquid flow to be treated is effluent, industrial process fluid, fresh water, raw water, mine water, process water, water that contains substances contributing to biological oxygen demand, water that contains substances contributing to chemical oxygen demand, or water that contains substances often called total organic carbons.

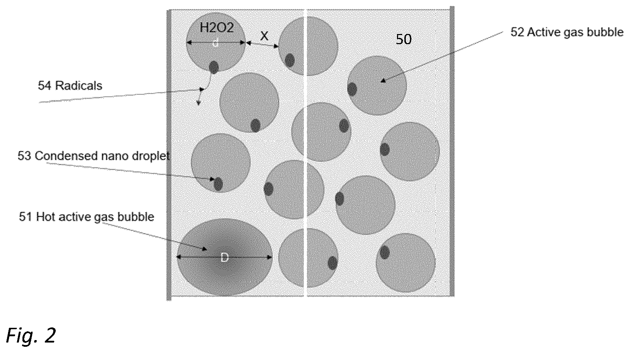

Figure 2 illustrates the effective and even distribution of microbubbles in the aqueous liquid stream to be treated in the sparger. The water to be treated 50 is mixed in the sparger with the gaseous oxidant. Hot active gas bubbles 51 are formed. Oxidant nano droplets 53 condensing on the surface of the gas bubbles results in the decrease of the bubble size, wherein active gas bubbles (microbubbles) 52 are formed. The oxidation reaction occurs on the surface of the formed microbubbles 51, in contact with the oxidant nano droplets 53 in the presence of the formed reactive radicals species 54. The distance X between the bubbles is short, 10 - 1000 micrometers, for example. Due to the condensation effect, part of the H₂O₂ vapour condensates to nano droplets and some part remains H₂O₂ vapour.

The present invention enables enhanced gas-liquid interactions, faster reaction kinetics, and reduced mixing energy requirements, due to the increased bubbles-liquid contact area by using more advanced sparger technology.

### EXAMPLE 1

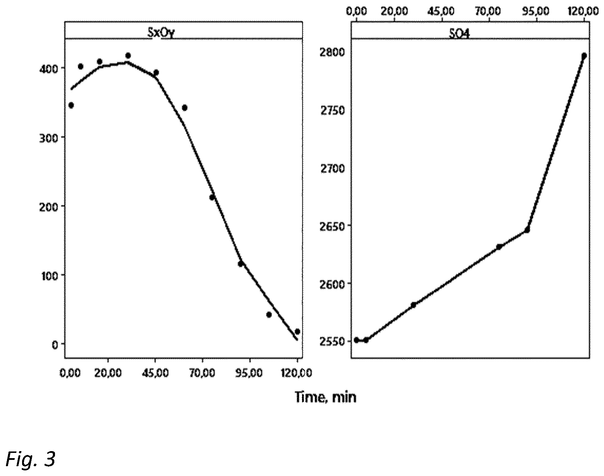

Aqueous liquid stream containing sulphur oxyanions, an oxidant (hydrogen peroxide), and carbonate ions was fed in alkaline conditions to a CLR sparger device via a Cleamix H202 vaporization unit. The concentration of sulphate and sulphur oxyanions were measured as a function of time. Figure 3 shows the oxidation of sulphur oxyanions to sulphate in the alkaline conditions as a function of time. The measurement results in Figure 3 indicate that the lower oxidation state SxOy compounds oxidize to sulphate in alkaline conditions.

### EXAMPLE 2

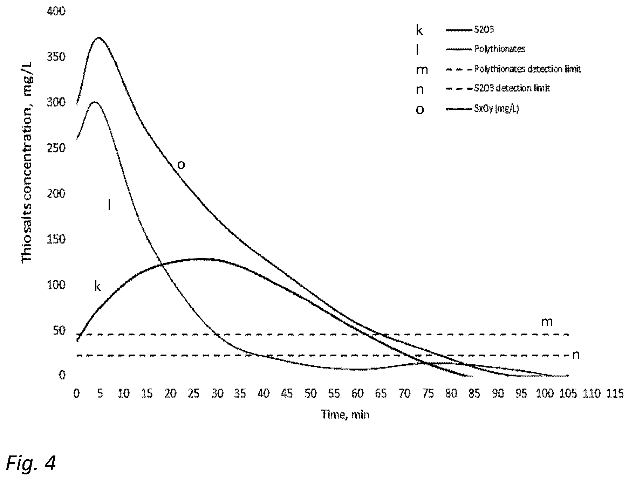

Aqueous liquid stream containing sulphur oxyanions was treated with an oxidant (hydrogen peroxide) by using a CLR sparger device and Cleamix H202 vaporization unit, in the following conditions: pH 10; no catalyst; H₂O₂ concentration in vapor 2000 ppm, flowrate (gas) = 4 m³/h; sample volume 38 L. The concentration of S₂O₃ and polythionates were measured as a function of time. Figure 4 shows the oxidation of sulphur oxyanions to sulphate in the alkaline conditions as a function of time. The measurement results in Figure 4 indicate a decrease in the concentration of S₂O₃ and polythionates, as they oxidize to sulphate in alkaline conditions. It is evident that vaporized hydrogen peroxide fed through the sparger oxidizes sulphur species in alkaline conditions.

It will be obvious to a person skilled in the art that, as the technology advances, the inventive concept can be implemented in various ways. The invention and its embodiments are not limited to the examples described above but may vary within the scope of the claims.

## Claims

1. A method for oxidation of sulphur oxyanions contained in a stream of aqueous liquid, wherein in the method
an aqueous liquid stream containing sulphur oxyanions is mixed, in at least one sparger device (7, 8), with at least one oxidant in gaseous form, thereby obtaining, mixed within the aqueous liquid stream, oxidant microbubbles containing reactive radicals species in contact with dissolved or condensed oxidant and the aqueous liquid stream, and/or reactive radicals species in contact with the at least one oxidant in gaseous form and the aqueous liquid stream,
the dissolved or condensed oxidant and the reactive radicals species, and/or the at least one oxidant in gaseous form and the reactive radicals species, are allowed to contact sulphur oxyanions contained in the aqueous liquid stream and to oxidize sulphur oxyanions contained in the aqueous liquid stream to sulphate and/or to other sulphur oxidation states, by an oxidative reaction of the sulphur oxyanions with the reactive radicals species, thereby forming sulphate and/or other sulphur oxidation states containing aqueous liquid stream,
wherein the oxidant is
hydrogen peroxide;
a mixture of N₂ and hydrogen peroxide, or
a mixture of air and hydrogen peroxide.

2. A method according to claim 1, wherein the method is performed in acidic, neutral or alkaline conditions.

3. A method according to claim 1 or 2, wherein
a respective storage vessel (1, 2) is located in fluid connection after each sparger device (7, 8), wherein sulphate and/or other sulphur oxidation states containing effluent in liquid form is obtained from the storage vessel (1, 2), wherein the method comprises
discharging the sulphate and/or other sulphur oxidation states containing effluent in liquid form from the storage vessel (1, 2), or
feeding the sulphate and/or other sulphur oxidation states containing effluent in liquid form from the storage vessel (1, 2) to a next oxidation segment.

4. A method according to claim 3, wherein unused oxidant is recycled in gaseous form from the storage vessel (1, 2) to a gas storage (4) containing the at least one oxidant in gaseous form or to a vaporizor unit (5, 6).

5. A method according to any of the preceding claims, wherein the reactive radicals species are carbonate radicals, hydroxyl radicals, and/or other reactive radicals species having a reactivity lower than that of the hydroxyl radicals, provided that the aqueous liquid stream comprises carbonate if the reactive radicals species comprises carbonate radicals.

6. A method according to any of the preceding claims, wherein in the method SO₃²⁻, S₂O₃²⁻, S₃O₆²⁻, S₄O₆²⁻ and/or other sulphur oxyanions are oxidized to sulphate and/or to other sulphur oxidation states.

7. A method according to any of the preceding claims, wherein the sparger device forms an oxidation segment with the respective storage vessel, wherein two or more oxidation segments are arranged in parallel and/or in series.

8. A method according to any of the preceding claims, wherein the at least one oxidant is fed at a temperature of 10 - 100 °C to the sparger device (7, 8).

## Patentansprüche

1. Verfahren zur Oxidation von Schwefeloxyanionen, die in einem Strom einer wässrigen Flüssigkeit enthalten sind, wobei bei dem Verfahren
ein wässriger Flüssigkeitsstrom, enthaltend Schwefeloxyanionen, in mindestens einer Sprühvorrichtung (7, 8) mit mindestens einem Oxidationsmittel in gasförmiger Form gemischt wird, wodurch in den wässrigen Flüssigkeitsstrom gemischte Oxidationsmittel-Mikrobläschen erhalten werden, die reaktive Radikalspezies, die mit gelöstem oder kondensiertem Oxidationsmittel und dem wässrigen Flüssigkeitsstrom in Kontakt stehen, und/oder reaktive Radikalspezies, die mit dem mindestens einen Oxidationsmittel in gasförmiger Form und dem wässrigen Flüssigkeitsstrom in Kontakt stehen, enthalten,
das gelöste oder kondensierte Oxidationsmittel und die reaktiven Radikalspezies und/oder das mindestens eine Oxidationsmittel in gasförmiger Form und die reaktiven Radikalspezies mit den in dem wässrigen Flüssigkeitsstrom enthaltenen Schwefeloxyanionen in Kontakt gebracht werden und die in dem wässrigen Flüssigkeitsstrom enthaltenen Schwefeloxyanionen durch eine oxidative Reaktion der Schwefeloxyanionen mit den reaktiven Radikalspezies zu Sulfat und/oder anderen Schwefeloxidationszuständen oxidiert werden, wodurch ein Sulfat und/oder andere Schwefeloxidationszustände enthaltender wässriger Flüssigkeitsstrom gebildet wird,
wobei das Oxidationsmittel
Wasserstoffperoxid;
ein Gemisch von N₂ und Wasserstoffperoxid, oder
ein Gemisch von Luft und Wasserstoffperoxid ist.

2. Verfahren gemäß Anspruch 1, wobei das Verfahren unter sauren, neutralen oder alkalischen Bedingungen durchgeführt wird.

3. Verfahren gemäß Anspruch 1 oder 2, wobei
ein entsprechender Speicherbehälter (1, 2) in Fluidverbindung hinter jeder Sprühvorrichtung (7, 8) angeordnet ist, wobei Sulfat und/oder andere Schwefeloxidationszustände enthaltender Abfluss in flüssiger Form aus dem Speicherbehälter (1, 2) erhalten wird, wobei das Verfahren umfasst
das Ablassen des Sulfat und/oder andere Schwefeloxidationszustände enthaltenden Abflusses in flüssiger Form aus dem Speicherbehälter (1, 2) oder
das Zuführen des Sulfat und/oder andere Schwefeloxidationszustände enthaltenden Abflusses in flüssiger Form aus dem Speicherbehälter (1, 2) zu einem nächsten Oxidationssegment.

4. Verfahren gemäß Anspruch 3, wobei ungenutztes Oxidationsmittel in gasförmiger Form aus dem Speicherbehälter (1, 2) zu einem Gasspeicher (4), der das mindestens eine Oxidationsmittel in gasförmiger Form enthält, oder zu einer Verdampfungseinheit (5, 6) zurückgeführt wird.

5. Verfahren gemäß einem der vorstehenden Ansprüche, wobei die reaktiven Radikalspezies Carbonatradikale, Hydroxylradikale und/oder andere reaktive Radikalspezies mit einer geringeren Reaktivität als die Hydroxylradikale sind, vorausgesetzt, dass der wässrige Flüssigkeitsstrom Carbonat enthält, wenn die reaktiven Radikale Carbonatradikale umfassen.

6. Verfahren gemäß einem der vorstehenden Ansprüche, wobei in dem Verfahren SO₃²⁻, S₂O₃²⁻, S₃O₆²⁻, S₄O₆²⁻ und/oder andere Schwefeloxyanionen zu Sulfat und/oder zu anderen Schwefeloxidationsstufen oxidiert werden.

7. Verfahren gemäß einem der vorstehenden Ansprüche, wobei die Sprühvorrichtung mit dem jeweiligen Vorratsbehälter ein Oxidationssegment bildet, wobei zwei oder mehr Oxidationssegmente parallel und/oder in Reihe angeordnet sind.

8. Verfahren gemäß einem der vorstehenden Ansprüche, wobei das mindestens eine Oxidationsmittel bei einer Temperatur von 10 - 100°C der Sprühvorrichtung (7, 8) zugeführt wird.

## Revendications

1. Méthode d'oxydation de soufre contenu dans un flux de liquide aqueux, dans laquelle, dans la méthode,
un flux de liquide aqueux contenant des oxyanions de soufre est mélangé, dans au moins un dispositif d'aspersion (7, 8), avec au moins un oxydant sous forme gazeuse, en obtenant ainsi, mélangées au sein du flux de liquide aqueux, des micro-bulles oxydantes contenant des espèces de radicaux réactifs en contact avec un oxydant dissous ou condensé et le flux de liquide aqueux, et/ou des espèces de radicaux réactifs en contact avec l'au moins un oxydant sous forme gazeuse et le flux de liquide aqueux,
l'oxydant dissous ou condensé et les espèces de radicaux réactifs, et/ou l'au moins un oxydant sous forme gazeuse et les espèces de radicaux réactifs, sont autorisés à entrer en contact avec les oxyanions de soufre contenus dans le flux de liquide aqueux et à oxyder des oxyanions de soufre contenus dans le flux de liquide aqueux en sulfate et/ou en d'autres états d'oxydation de soufre, par une réaction oxydative des oxyanions de soufre avec les espèces de radicaux réactifs, en formant ainsi du sulfate et/ou d'autres états d'oxydation de soufre contenant un flux de liquide aqueux,
dans laquelle l'oxydant est du peroxyde d'hydrogène ;
un mélange de N₂ et de peroxyde d'hydrogène, ou
un mélange d'air et de peroxyde d'hydrogène.

2. Méthode selon la revendication 1, dans laquelle la méthode est réalisée dans des conditions acides, neutres ou alcalines.

3. Méthode selon la revendication 1 ou 2, dans laquelle
un récipient de stockage (1, 2) respectif est situé en connexion fluidique après chaque dispositif d'aspersion (7, 8), dans laquelle du sulfate et/ou d'autres états d'oxydation de soufre contenant un effluent sous forme liquide sont obtenus à partir du récipient de stockage (1, 2), dans laquelle la méthode comprend
le déchargement du sulfate et/ou d'autres états d'oxydation de soufre contenant un effluent sous forme liquide à partir du récipient de stockage (1, 2), ou
l'acheminement du sulfate et/ou d'autres états d'oxydation de soufre contenant un effluent sous forme liquide à partir du récipient de stockage (1, 2) vers un segment d'oxydation suivant.

4. Méthode selon la revendication 3, dans laquelle un oxydant non utilisé est recyclé sous forme gazeuse à partir du récipient de stockage (1, 2) vers un stockage de gaz (4) contenant l'au moins un oxydant sous forme gazeuse ou vers une unité de vaporisation (5, 6).

5. Méthode selon l'une quelconque des revendications précédentes, dans laquelle les espèces de radicaux réactifs sont des radicaux carbonate, des radicaux hydroxyle et/ou d'autres espèces de radicaux réactifs ayant une réactivité inférieure à celle des radicaux hydroxyle, à condition que le flux de liquide aqueux comprenne du carbonate si les espèces de radicaux réactifs comprennent des radicaux carbonate.

6. Méthode selon l'une quelconque des revendications précédentes, dans laquelle, dans la méthode, SO₃²⁻, S₂O₃²⁻, S₃O₆²⁻, S₄O₆²⁻ et/ou d'autres oxyanions de soufre sont oxydés en sulfate et/ou en d'autres états d'oxydation de soufre.

7. Méthode selon l'une quelconque des revendications précédentes, dans laquelle le dispositif d'aspersion forme un segment d'oxydation avec le récipient de stockage respectif, dans laquelle deux segments d'oxydation ou plus sont agencés en parallèle et/ou en série.

8. Méthode selon l'une quelconque des revendications précédentes, dans laquelle l'au moins un oxydant est acheminé à une température de 10 à 100 °C dans le dispositif d'aspersion (7, 8).
